# EUROPEAN PATENT APPLICATION

(11) **EP 2 840 735 A1**
(43) Date of publication of application: **25.02.2015**
(21) Application number: 13775311.7
(22) Date of filing: 11.04.2013
(51) Int. Cl.: H04L 9/32

(54) **ELECTRONIC CIPHER GENERATION METHOD, APPARATUS AND DEVICE, AND ELECTRONIC CIPHER AUTHENTICATION SYSTEM**

(30) Priority: 13.04.2012 CN 201210110454
(71) Applicant: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2013/074111
(87) International publication number: WO 2013/152735

(57) **Abstract**

Disclosed are an electronic cipher generation method and device, and an electronic cipher authentication system. The method comprises the steps of: prompting a user to input a challenge code through prompting information, the prompting information being information which contains the meaning represented by the challenge code to be input; receiving the challenge code which is input by the user; and generating a dynamic electronic cipher according to the input challenge code and a current time parameter. Because a challenge code area is divided into a plurality of parts, the prompting information which contains the actual meaning of the challenge code to be input can be provided for the user, and the user inputs each part of the challenge code in sequence according to the prompting information, thereby being able to confirm whether this transaction is a real transaction needed by the user according to the prompting information and the input challenge code, preventing the phishing behaviour of a hacker and ensuring the security of user property.

## Description

### FIELD

The present disclosure relates to an information security field, and more particularly relates to an electronic password generating method, an electronic password generating device, an electronic password generating apparatus and an electronic password authentication system.

### BACKGROUND

In recent years, with the rapid development of Internet and financial informatization, online banking is commonly appreciated by users and the banking industry for its convenience, efficiency and other advantages. In order to overcome the security defects of authentication based on fixed password, most banks and various large e-commerce web sites use dynamic password tokens or dynamic password cards to enhance the security of network authentication.

A dynamic password technology, also known as one time password (OTP for short) technology, is characterized in that a user inputs an electronic password according to a digit displayed on a dynamic password token provided by a service provider. Based on different ways to generate passwords, the dynamic password technology may be classified into a time-based dynamic password technology and a challenge/response-based dynamic password technology.

When the time-based dynamic password technology is used, an electronic password generating device and a server are synchronic in time, and store the same secret key seed. The electronic password generating device and the server generate one electronic password using the secret key seed at intervals (e.g., 60 seconds). When the user authentication needs to be performed, a user obtains a current electronic password on a display screen of the electronic password generating device and then inputs the electronic password at a transaction terminal, and the transaction terminal sends the electronic password, a username, a static password and other information to the server for authentication.

When the challenge/response-based dynamic password technology is used, an electronic password generating device and a server store the same secret key seed. When the user authentication needs to be performed, the server generates a challenge code for a user, and the user obtains the challenge code and then inputs the challenge code to the electronic password generating device. The electronic password generating device generates a response code (i.e. electronic password) using the secret key seed and the challenge code input by the user, the user obtains the current electronic password on a display screen of the electronic password generating device and then inputs the electronic password at a transaction terminal, and the transaction terminal sends the electronic password, a username, a static password and other information to the server for authentication.

The above dynamic password-based authentication method well overcomes fixed password information defects in the static password authentication, but also has the following defects.

When the time-based dynamic password technology is used, the electronic password is not invalid after used once, but valid within a certain time, so when the electronic password is intercepted, a hacker may use the electronic password to interact with the server. For example, when the hacker gets the account information of the user and intercepts the electronic password of the user in this time period, the hacker may perform a subsequent operation. That is, there is a large security risk in the time-based dynamic password technology in the related art.

When the challenge/response-based dynamic password technology is used, the server generally sends the challenge code to the transaction terminal or mobile phone of the user randomly, and the random challenge code is irrelevant to the transaction information and the user information (collectively referred to as user transaction information). Therefore, the user may neither know whether this transaction is a real transaction the user needs to perform, nor know this transaction is which transaction. When the user may not know whether this transaction is a real transaction the user needs to perform, the user may pay for the non-real transaction, which may cause the property loss of the user. Therefore, the sending of the random challenge code from the server to the transaction terminal or mobile phone of the user may be an insecure factor in the electronic transaction.

When the challenge/response-based dynamic password technology is used, the electronic password generating device generates the electronic password according to the challenge code. Even if the challenge code uses the user transaction information, e.g., a transaction account and a transaction amount, once the hacker gets the account information of the user, the hacker poses as a bank and sends the transaction account and the transaction amount to the user, and instructs the user to send the display results to the "bank". For example, the hacker poses as a bank and sends a short message to the user, so as to inform the user that the electronic password generating device needs to be updated, and the user needs to input the received information to generate an electronic password, and to feed back the electronic password to the hacker. In this way, the hacker may directly obtain the electronic password of the user to perform the subsequent operation, thus causing a large security risk.

### SUMMARY

An objective of the present disclosure is to provide an electronic password generating method, an electronic password generating device, an electronic password generating apparatus and an electronic password authentication system, which may prevent a property loss of a user caused by the phishing of a hacker.

The objective of the present disclosure is realized by the following technical solutions.

An electronic password generating method comprises steps of: prompting a user to input a challenge code by a prompting information, in which the prompting information is an information containing a meaning represented by the challenge code to be input; receiving the challenge code input by the user; and generating a dynamic electronic password according to the input challenge code and a current time parameter.

Furthermore, the prompting information at least comprises a first prompting information and a second prompting information.

Furthermore, prompting the user to input the challenge code by the prompting information comprises: prompting the user to input a first information of the challenge code by the first prompting information; and prompting the user to input a second information of the challenge code by the second prompting information.

Furthermore, the first prompting information is an information prompting the user to input a transaction account, and the second prompting information is an information prompting the user to input a transaction amount.

Furthermore, the challenge code at least comprises a first information of the challenge code and a second information of the challenge code.

Furthermore, receiving the challenge code input by the user comprises: sequentially receiving the first information of the challenge code and the second information of the challenge code which are input by the user.

Furthermore, the first information of the challenge code is a transaction account, and the second information of the challenge code is a transaction amount.

Furthermore, before prompting the user to input the challenge code by the prompting information, the method further comprises: prompting the user to input a power-on password; validating whether the power-on password input by the user is correct; and if the power-on password input by the user is correct, prompting the user to input the challenge code by the prompting information.

An electronic password generating device comprises: a prompting unit configured for prompting a user to input a challenge code by a prompting information, in which the prompting information is an information containing a meaning represented by the challenge code to be input; a receiving unit configured for receiving the challenge code input by the user; and a generating unit configured for generating a dynamic electronic password according to the input challenge code and a current time parameter.

Furthermore, the prompting information at least comprises a first prompting information and a second prompting information.

Furthermore, the prompting unit is particularly configured for: prompting the user to input a first information of the challenge code by the first prompting information; and prompting the user to input a second information of the challenge code by the second prompting information.

Furthermore, the first prompting information is an information prompting the user to input a transaction account, and the second prompting information is an information prompting the user to input a transaction amount.

Furthermore, the challenge code at least comprises a first information of the challenge code and a second information of the challenge code.

Furthermore, the receiving unit is particularly configured for: sequentially receiving the first information of the challenge code and the second information of the challenge code which are input by the user.

Furthermore, the first information of the challenge code is a transaction account, and the second information of the challenge code is a transaction amount.

Furthermore, the electronic password generating device further comprises a verifying unit configured for verifying whether the power-on password input by the user is correct, and indicating for the prompting unit to prompt the user to input the challenge code after verifying that the power-on password input by the user is correct.

An electronic password generating apparatus comprises: a prompting device configured for prompting a user to input a challenge code by a prompting information, in which the prompting information is an information containing a meaning represented by the challenge code to be input; an input device configured for inputting the challenge code; and a processing chip configured for receiving the challenge code, and generating an electronic password according to the challenge code and a current time parameter.

Furthermore, the prompting device comprises a display device and/or a sounding device, the display device is configured for displaying the prompting information in a form of a text, and the sounding device is configured for outputting the prompting information in a form of a voice.

Furthermore, the input device comprises a button and/or a touch screen.

Furthermore, the prompting information at least comprises a first prompting information and a second prompting information.

Furthermore, the prompting device is particularly configured for: prompting the user to input a first information of the challenge code by the first prompting information; and prompting the user to input a second information of the challenge code by the second prompting information.

Furthermore, the first prompting information is an information prompting the user to input a transaction account, and the second prompting information is an information prompting the user to input a transaction amount.

Furthermore, the challenge code at least comprises a first information of the challenge code and a second information of the challenge code.

Furthermore, the processing chip is particularly configured for: sequentially receiving the first information of the challenge code and the second information of the challenge code which are input by the user.

Furthermore, the first information of the challenge code is a transaction account, and the second information of the challenge code is a transaction amount.

Furthermore, the input device is further configured for inputting a power-on password.

Furthermore, the processing chip is further configured for validating whether the power-on password is correct; if the power-on password is correct, indicating for the prompting device to prompt the user to input the challenge code by the prompting information.

An electronic password authentication system comprises: the abovementioned electronic password generating apparatus; and a transaction system configured for generating an electronic password at the transaction system according to the challenge code and the current time parameter, receiving the electronic password at the electronic password generating apparatus, and comparing the electronic password at the electronic password generating apparatus with the electronic password at the transaction system to complete the authentication.

An electronic password generating method comprises steps of: prompting a user to input a challenge code by a prompting information, in which the prompting information is an information containing a meaning represented by the challenge code to be input the user knows; receiving the challenge code input by the user; and generating a dynamic electronic password according to the input challenge code and a current time parameter.

Furthermore, the prompting information at least comprises a first prompting information and a second prompting information.

Furthermore, prompting the user to input the challenge code by the prompting information comprises: prompting the user to input a first information of the challenge code by the first prompting information; and prompting the user to input a second information of the challenge code by the second prompting information.

Furthermore, the first prompting information is an information prompting the user to input a transaction account, and the second prompting information is an information prompting the user to input a transaction amount.

Furthermore, the challenge code at least comprises a first information of the challenge code and a second information of the challenge code.

Furthermore, receiving the challenge code input by the user comprises: sequentially receiving the first information of the challenge code and the second information of the challenge code which are input by the user.

Furthermore, the first information of the challenge code is a transaction account, and the second information of the challenge code is a transaction amount.

Furthermore, before prompting the user to input the challenge code by the prompting information, the method further comprises: prompting the user to input a power-on password; validating whether the power-on password input by the user is correct; and if the power-on password input by the user is correct, prompting the user to input the challenge code by the prompting information.

An electronic password generating device comprises: a prompting unit configured for prompting a user to input a challenge code by a prompting information, in which the prompting information is an information containing a meaning represented by the challenge code to be input the user knows; a receiving unit configured for receiving the challenge code input by the user; and a generating unit configured for generating a dynamic electronic password according to the input challenge code and a current time parameter.

Furthermore, the prompting information at least comprises a first prompting information and a second prompting information.

Furthermore, the prompting unit is particularly configured for: prompting the user to input a first information of the challenge code by the first prompting information; and prompting the user to input a second information of the challenge code by the second prompting information.

Furthermore, the first prompting information is an information prompting the user to input a transaction account, and the second prompting information is an information prompting the user to input a transaction amount.

Furthermore, the challenge code at least comprises a first information of the challenge code and a second information of the challenge code.

Furthermore, the receiving unit is particularly configured for: sequentially receiving the first information of the challenge code and the second information of the challenge code which are input by the user.

Furthermore, the first information of the challenge code is a transaction account, and the second information of the challenge code is a transaction amount.

Furthermore, the electronic password generating device further comprises a verifying unit configured for verifying whether the power-on password input by the user is correct, and indicating for the prompting unit to prompt the user to input the challenge code after verifying that the power-on password input by the user is correct.

An electronic password generating apparatus comprises: a processing chip using the abovementioned electronic password generating method, an input device and a prompting device. The input device is configured for inputting the challenge code. The prompting device is configured for prompting a prompting information containing a meaning represented by the challenge code to be input the user knows.

An electronic password authentication system comprises the abovementioned electronic password generating apparatus and a transaction system. The transaction system is configured for generating an electronic password at the transaction system according to the challenge code and the current time parameter, receiving the electronic password at the electronic password generating apparatus, and comparing the electronic password at the electronic password generating apparatus with the electronic password at the transaction system to complete the authentication.

It may be seen from the technical solutions provided by the present disclosure that, with the electronic password generating method, the electronic password generating device, the electronic password generating apparatus and the electronic password authentication system according to embodiments of the present disclosure, since the challenge code is divided into several parts, the user may be provided with prompting information including the actual meaning of the challenge code to be input, and the user sequentially inputs individual parts of the challenge code according to the prompting information, and consequently confirms whether this transaction is a real transaction needed by the user according to the prompting information and the input challenge code, thus preventing the phishing behavior of a hacker to a certain extent and ensuring the property security of the user.

Further, a dynamic electronic password may be generated according to the challenge code and the current time parameter, and it may be ensured that even if the challenge codes are the same, for example, the same amount of money is remitted to the same account, different electronic passwords may be generated, thus ensuring the security of the electronic passwords.

### BRIEF DESCRIPTION OF THE DRAWINGS

In order to explicitly illustrate technical solutions of embodiments of the present disclosure, a brief introduction for the drawings used in describing the embodiments will be listed as follows. Apparently, the drawings described below are only corresponding to some embodiments of the present disclosure, and those skilled in the art may obtain other drawings according to these drawings without creative labor.
Fig. 1 is a schematic diagram of an electronic password authentication system according to an embodiment of the present disclosure;
Fig. 2 is a flow chart of an electronic password authentication method according to an embodiment of the present disclosure;
Fig. 3 is a flow chart of an electronic password generating method according to an embodiment of the present disclosure;
Fig. 4 is a schematic diagram of an electronic password generating device according to an embodiment of the present disclosure; and
Fig. 5 is a schematic diagram of an electronic password generating apparatus according to an embodiment of the present disclosure.

### DETAILED DESCRIPTION

The technical solutions of embodiments of the present disclosure will be clearly and completely described below in detail with reference to drawings in embodiments of the present disclosure. Apparently, the described embodiments are only some embodiments of the present disclosure rather than all the embodiments. Other embodiments obtained by those skilled in the art based on the described embodiments without creative labor fall into the scope of the present disclosure.

Hereinafter, embodiments of the present disclosure will be further described in detail with reference to the drawings.

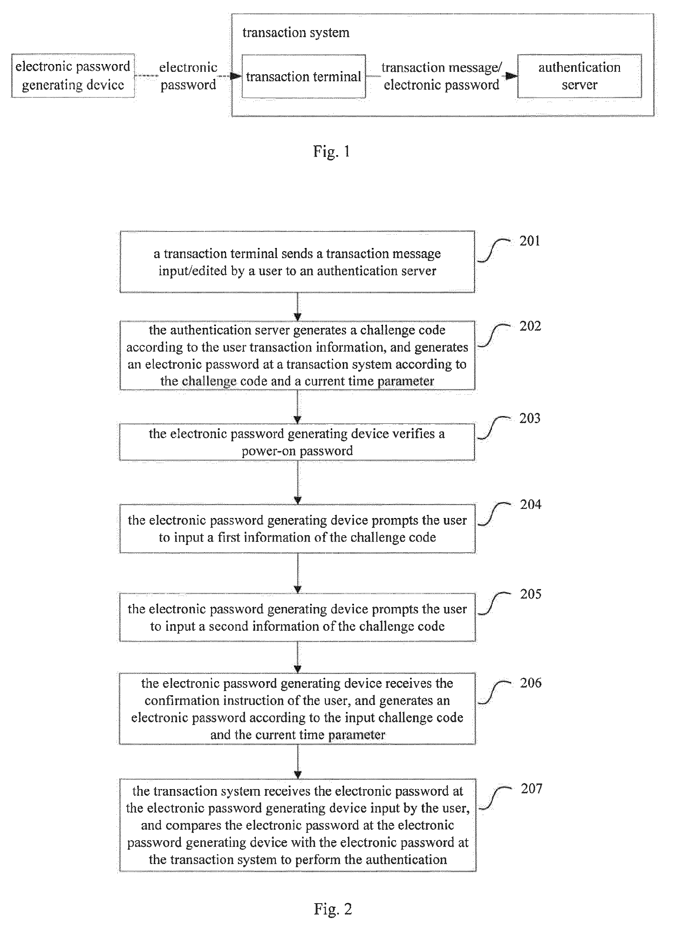

Fig. 1 is a schematic diagram of an electronic password authentication system according to an embodiment of the present disclosure. Referring to Fig. 1, the electronic password authentication system comprises a transaction system and an electronic password generating device.

The transaction system may comprise a transaction terminal and an authentication server. The transaction terminal is connected with the authentication server via a network such as a local area network, an Internet, a GSM (global system for mobile communications) network or a 3G network.

The transaction terminal may be ATM (automated teller machine) of a bank, and may also be a personal computer, a mobile phone terminal, and other apparatuses.

The authentication server is configured for authenticating an electronic password and realizing a transaction of a user, and is generally a server provided by a bank.

The transaction terminal and the authentication server may also be incorporated into a single physical apparatus.

The user inputs/edits a user transaction information in the transaction terminal. The transaction terminal sends transaction messages (including the user transaction information) input/edited by the user to the authentication server one by one. The user transaction information generally comprises a username, a transaction account, a transaction amount, a transaction serial number, and other information.

The authentication server of the transaction system acquires the user transaction information for this transaction according to the transaction message for this transaction, uses the user transaction information as a challenge code, and generates an electronic password at the transaction system according to the challenge code and a current time parameter. The transaction system receives an electronic password at the electronic password generating device, and then compares the electronic password at the electronic password generating device with the electronic password at the transaction system to complete the authentication. The current time parameter at the transaction system and a current time parameter at the electronic password generating device are the same within a time period (e.g., 2 minutes).

The challenge code may be divided into several parts, for example, a first information of the challenge code and a second information of the challenge code. Each information of the challenge code is an information which may be identified by the user and represent a particular meaning, so that the user may determine whether the transaction is a real transaction needed by the user. For example, the first information of the challenge code is a transaction account, and the second information of the challenge code is a transaction amount.

The electronic password generating device may be a dynamic password token.

The electronic password generating device is configured for prompting the user to input a power-on password after the electronic password generating device is started; after verifying that the power-on password input by the user is correct, outputting a first prompting information including the actual meaning of the challenge code to be input, and prompting the user to input the first information (e.g., transaction account) of the challenge code; after receiving the first information of the challenge code input by the user, outputting a second prompting information including the actual meaning of the challenge code to be input, and prompting the user to input the second information (e.g., transaction amount) of the challenge code; and after receiving the second information of the challenge code input by the user, receiving a confirmation instruction input by the user, and generating the electronic password at the electronic password generating device according to the input challenge code and the current time parameter.

Certainly, if the challenge code is divided into three parts, the electronic password generating device may also prompt the user to know a third prompting information (e.g., a transaction serial number, or a random code) including the actual meaning of the challenge code to be input, and generate the electronic password at the electronic password generating device according to the input challenge code and the current time parameter.

The first prompting information, the second prompting information and the third prompting information may be output by displaying or sounding.

With the electronic password authentication system according to embodiments of the present disclosure, since the challenge code is divided into several parts, the electronic password authentication system may provide the user with prompting information including the actual meaning of the challenge code to be input, and the user sequentially inputs individual parts of the challenge code according to the prompting information, and consequently confirms whether this transaction is a real transaction needed by the user according to the prompting information and the input challenge code, thus preventing the phishing behavior of a hacker to a certain extent and ensuring the property security of the user.

In this embodiment, a dynamic electronic password may be generated according to the challenge code and the current time parameter, and it may be ensured that even if the challenge codes are the same, for example, the same amount of money is remitted to the same account, different electronic passwords may be generated, thus ensuring the security of the electronic passwords.

Fig. 2 is a flow chart of an electronic password authentication method according to an embodiment of the present disclosure. Referring to Fig. 2, the electronic password authentication method comprises the following steps.

Step 201, a transaction terminal sends a transaction message input/edited by a user to an authentication server.

Specifically, the authentication server stores a username, an account and other information of each user, and also stores a serial number, an algorithm, a current time parameter and other information of an electronic password generating device of the user.

When the user inputs/edits the transaction message at the transaction terminal, the authentication server receives the transaction message, and acquires a user transaction information in the transaction message.

Step 202, the authentication server generates a challenge code according to the user transaction information, and generates an electronic password at a transaction system according to the challenge code and a current time parameter.

Specifically, the authentication server may generate the electronic password at the transaction system according to the challenge code identical to the challenge code input to the electronic password generating device, in combination with the current time parameter identical to the current time parameter in the electronic password generating device.

Step 203, the electronic password generating device verifies a power-on password.

Specifically, when the electronic password generating device is started, the electronic password generating device prompts the user to input the power-on password, verifies whether the power-on password is correct after receiving the power-on password input by the user, if the power-on password is correct, performs a subsequent operation, otherwise, prompts that the power-on password is wrong. After the power-on password is wrongly input for a predetermined times (e.g., 3 times), the electronic password generating device is locked. Alternatively, once it is verified that the power-on password is wrong, the electronic password generating device is directly locked.

Step 204, the electronic password generating device prompts the user to input a first information of the challenge code.

Specifically, after verifying that the power-on password is correct, the electronic password generating device outputs a first prompting information including the actual meaning of the challenge code to be input, and prompts the user to input the first information of the challenge code.

For example, after verifying that the power-on password is correct, the electronic password generating device outputs the first prompting information including the actual meaning of the challenge code to be input, for example, "please input a transaction account", and prompts the user to input the transaction account, and the user inputs the transaction account in the user transaction information displayed on the transaction terminal to the electronic password generating device. That is, the transaction account input by the user is the first information of the challenge code.

Step 205, the electronic password generating device prompts the user to input a second information of the challenge code.

Specifically, after receiving the first information of the challenge code input by the user, according to a confirmation instruction of the user, the electronic password generating device outputs the second prompting information including the actual meaning of the challenge code to be input, and prompts the user to input the second information of the challenge code. Alternatively, it is determined whether the number of bits of the first information of the challenge code input by the user is a predetermined number of bits, if the number of bits of the first information of the challenge code input by the user is a predetermined number of bits, the electronic password generating device outputs the second prompting information including the actual meaning of the challenge code to be input, and prompts the user to input the second information of the challenge code.

For example, after the electronic password generating device prompts the user to input the transaction account and the user inputs the transaction account in the user transaction information displayed on the transaction terminal to the electronic password generating device, the electronic password generating device outputs the second prompting information including the actual meaning of the challenge code to be input, for example, "please input a transaction amount", and prompts the user to input the transaction amount, and the user inputs the transaction amount in the user transaction information displayed on the transaction terminal to the electronic password generating device. That is, the transaction amount input by the user is the second information of the challenge code.

Certainly, after receiving the second information of the challenge code input by the user, the electronic password generating device may also output a third prompting information including the actual meaning of the challenge code to be input, and prompt the user to input a third information of the challenge code, so as to further enhance the security.

The first prompting information, the second prompting information and the third prompting information may be output by displaying or sounding.

Step 206, the electronic password generating device receives the confirmation instruction of the user, and generates an electronic password according to the input challenge code and the current time parameter.

Specifically, after the user inputs the first information of the challenge code and the second information of the challenge code, the electronic password generating device receives the confirmation instruction of the user, which indicates that the input of all parts of the challenge code is completed. Then, the electronic password generating device generates the electronic password according to the input challenge code (identical to the challenge code displayed on the transaction system) and the current time parameter (identical to the current time parameter of the authentication server) based on a predetermined algorithm.

The process of generating the electronic password is known to those skilled in the art, which will be omitted here.

Step 207, the transaction system receives the electronic password at the electronic password generating device input by the user, and compares the electronic password at the electronic password generating device with the electronic password at the transaction system to perform the authentication.

Specifically, the transaction terminal receives the electronic password at the electronic password generating device input by the user, and sends the electronic password at the electronic password generating device to the authentication server. The authentication server receives the electronic password at the electronic password generating device, and compares the electronic password at the electronic password generating device with the electronic password at the transaction system generated previously. If it is determined that the electronic password at the electronic password generating device is identical to the electronic password at the transaction system, a subsequent processing is performed, otherwise, a prompting information is fed back to the transaction terminal, and the transaction terminal prompts that the electronic password at the electronic password generating device input by the user is wrong. After the electronic password at the electronic password generating device input by the user is wrongly input for a predetermined times (e.g., 3 times), the electronic password generating device is locked. Alternatively, once the electronic password at the transaction system is wrongly input, all the functions of the transaction system which are corresponding to the electronic password generating device are directly stopped.

Further, the transaction terminal may encrypt the received electronic password at the electronic password generating device according to a predetermined encryption algorithm, and then send the encrypted electronic password to the authentication server. The authentication server decrypts the encrypted electronic password according to a predetermined decryption algorithm to obtain the electronic password at the electronic password generating device, and compares the electronic password at the electronic password generating device with the electronic password at the transaction system generated previously. If it is determined that the electronic password at the electronic password generating device is identical to the electronic password at the transaction system, a subsequent processing is performed. By encrypting the electronic password, the electronic password may be prevented from being intercepted during the transmission, thus enhancing the security.

Certainly, Step 204 and Step 205 in this embodiment may be performed simultaneously, i.e. the electronic password generating device prompts the user to input the first information of the challenge code and prompts the user to input the second information of the challenge code simultaneously. After the user inputs all parts of the challenge code, the electronic password generating device receives the confirmation instruction of the user, and generates the electronic password according to the input challenge code and the current time parameter.

With the electronic password authentication method according to embodiments of the present disclosure, since the challenge code is divided into several parts and the user is provided with prompting information including the actual meaning of the challenge code to be input, the user sequentially inputs individual parts of the challenge code according to the prompting information, and consequently confirms whether this transaction is a real transaction needed by the user according to the prompting information and the input challenge code, thus preventing the phishing behavior of a hacker to a certain extent and ensuring the property security of the user.

In this embodiment, a dynamic electronic password may be generated according to the challenge code and the current time parameter, and it may be ensured that even if the challenge codes are the same, for example, the same amount of money is remitted to the same account, different electronic passwords may be generated, thus ensuring the security of the electronic passwords.

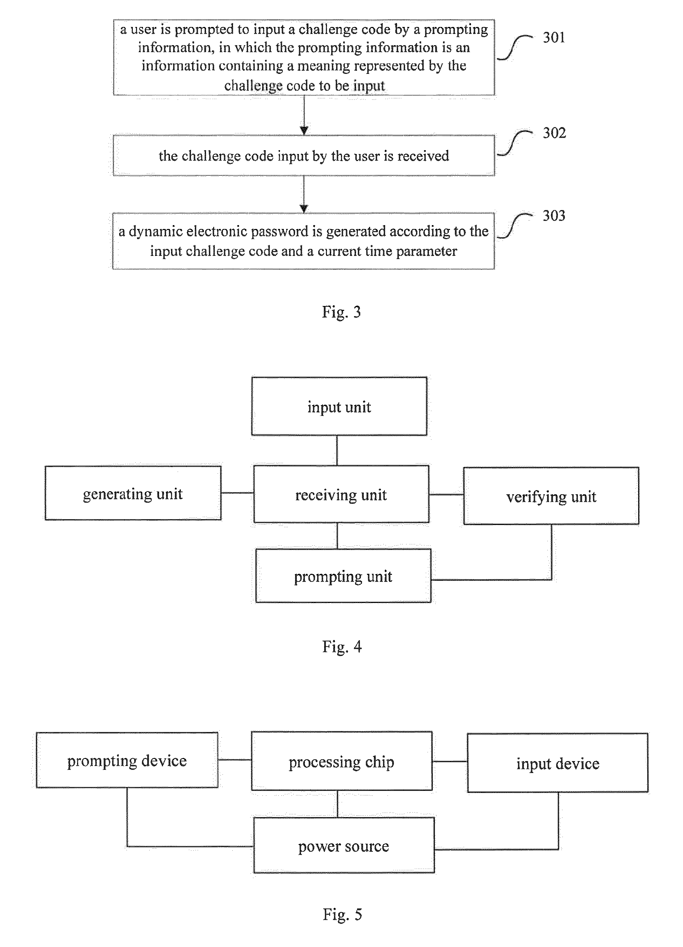

Fig. 3 is a flow chart of an electronic password generating method according to an embodiment of the present disclosure. Referring to Fig. 3, the electronic password generating method comprises the following steps.

Step 301, a user is prompted to input a challenge code by a prompting information, in which the prompting information is an information containing a meaning represented by the challenge code to be input.

Specifically, the prompting information at least comprises a first prompting information and a second prompting information. The user is prompted to input a first information of the challenge code by the first prompting information, and the user is prompted to input a second information of the challenge code by the second prompting information. The first prompting information may be an information prompting the user to input a transaction account, and the second prompting information may be an information prompting the user to input a transaction amount.

Certainly, before Step 301, the user may be prompted to input a power-on password; it is validated whether the power-on password input by the user is correct; and if the power-on password input by the user is correct, the user is prompted to input the challenge code by the prompting information.

Step 302, the challenge code input by the user is received.

Specifically, the challenge code at least comprises the first information of the challenge code and the second information of the challenge code.

The first information of the challenge code and the second information of the challenge code which are input by the user are sequentially received, until all parts of the challenge code are received. The first information of the challenge code may be a transaction account, and the second information of the challenge code may be a transaction amount.

Step 303, a dynamic electronic password is generated according to the input challenge code and a current time parameter.

With the electronic password generating method according to embodiments of the present disclosure, since the challenge code is divided into several parts and the user is provided with prompting information including the actual meaning of the challenge code to be input, the user sequentially inputs individual parts of the challenge code according to the prompting information, and consequently confirms whether this transaction is a real transaction needed by the user according to the prompting information and the input challenge code, thus preventing the phishing behavior of a hacker to a certain extent and ensuring the property security of the user.

In this embodiment, a dynamic electronic password may be generated according to the challenge code and the current time parameter, and it may be ensured that even if the challenge codes are the same, for example, the same amount of money is remitted to the same account, different electronic passwords may be generated, thus ensuring the security of the electronic passwords.

Fig. 4 is a schematic diagram of an electronic password generating device according to an embodiment of the present disclosure. Referring to Fig. 4, the electronic password generating device may comprise an input unit, a receiving unit, a verifying unit, a prompting unit, and a generating unit.

The input unit is configured for providing a user with an input button, an input touch screen, etc.

The receiving unit is configured for receiving a power-on password, a first information of the challenge code, a second information of the challenge code, a confirmation instruction, a canceling instruction, or other control instruction information input by the user.

The verifying unit is configured for verifying whether the power-on password input by the user and received by the receiving unit is correct.

The prompting unit is configured for prompting the user to input the power-on password; after the verifying unit verifies that the power-on password input by the user is correct, providing the user with a first prompting information including the actual meaning of the challenge code to be input, and prompting the user to input the first information of the challenge code; and after the receiving unit receives the first information of the challenge code input by the user, providing the user with a second prompting information including the actual meaning of the challenge code to be input, and prompting the user to input the second information of the challenge code. The first prompting information and the second prompting information are displaying prompts (in a form of text) or sounding prompts (in a form of voice).

The generating unit generates an electronic password at an electronic password generating device according the input challenge code and a current time parameter after the receiving unit receives a confirmation instruction input by the user.

Certainly, if the challenge code is divided into three parts, the prompting unit is further configured for providing the user with a third prompting information including the actual meaning of the challenge code to be input, and prompting the user to input a third information of the challenge code after the receiving unit receives the second information of the challenge code input by the user. The third prompting information may also be output by displaying or sounding.

With the electronic password generating device according to embodiments of the present disclosure, since the challenge code is divided into several parts, the electronic password generating device may provide the user with prompting information including the actual meaning of the challenge code to be input, and the user sequentially inputs individual parts of the challenge code according to the prompting information, and consequently confirms whether this transaction is a real transaction needed by the user according to the prompting information and the input challenge code, thus preventing the phishing behavior of a hacker to a certain extent and ensuring the property security of the user.

In this embodiment, a dynamic electronic password may be generated according to the challenge code and the current time parameter, and it may be ensured that even if the challenge codes are the same, for example, the same amount of money is remitted to the same account, different electronic passwords may be generated, thus ensuring the security of the electronic passwords.

Fig. 5 is a schematic diagram of an electronic password generating apparatus according to an embodiment of the present disclosure. Referring to Fig. 5, the electronic password generating apparatus comprises a prompting device, an input device, a processing chip, and a power source etc.

The power source supplies power to individual modules (e.g., the prompting device, the input device, the processing chip, etc.) of the electronic password generating apparatus.

The input device is a button or a touch screen and is configured for providing the user with a medium for inputting a power-on password, a first information of the challenge code, a second information of the challenge code, a confirmation instruction, a canceling instruction, or other control instruction information.

The prompting device comprises a display device and a sounding device, and is configured for prompting the user to input the power-on password; after the processing chip verifies that the power-on password input by the user is correct, outputting a first prompting information including the actual meaning of the challenge code to be input, and prompting the user to input the first information of the challenge code; and after the processing chip receives the first information of the challenge code input by the user, outputting a second prompting information including the actual meaning of the challenge code to be input, and prompting the user to input the second information of the challenge code. The first prompting information and the second prompting information are output by displaying on the display device or by sounding on the sounding device.

The processing chip is configured for verifying whether the power-on password input by the user is correct, controlling the display device or the sounding device to output the prompting information, and generating an electronic password according to the challenge code and a current time parameter.

Certainly, if the challenge code is divided into three parts, the display device or the sounding device is further configured for outputting a third prompting information including the actual meaning of the challenge code to be input, and prompting the user to input a third information of the challenge code after the processing chip receives the second information of the challenge code input by the user. The third prompting information may also be output by displaying on the display device or by sounding on the sounding device.

With the electronic password generating apparatus according to embodiments of the present disclosure, since the challenge code is divided into several parts, the electronic password generating apparatus may output prompting information including the actual meaning of the challenge code to be input, and the user sequentially inputs individual parts of the challenge code according to the prompting information, and consequently confirms whether this transaction is a real transaction needed by the user according to the prompting information and the input challenge code, thus preventing the phishing behavior of a hacker to a certain extent and ensuring the property security of the user.

In this embodiment, a dynamic electronic password may be generated according to the challenge code and the current time parameter, and it may be ensured that even if the challenge codes are the same, for example, the same amount of money is remitted to the same account, different electronic passwords may be generated, thus ensuring the security of the electronic passwords.

Although explanatory embodiments have been shown and described above, they are not construed to limit the present disclosure. Any changes or alternatives made within the technical scope of the present disclosure by those skilled in the art should be included within the protection scope of the present disclosure which is defined by the protection scope of the claims.

## Claims

1. An electronic password generating method, comprising steps of:
prompting a user to input a challenge code by a prompting information, wherein the prompting information is an information containing a meaning represented by the challenge code to be input;
receiving the challenge code input by the user; and
generating a dynamic electronic password according to the input challenge code and a current time parameter.

2. The method according to claim 1, wherein the prompting information at least comprises a first prompting information and a second prompting information.

3. The method according to claim 2, wherein prompting the user to input the challenge code by the prompting information comprises:
prompting the user to input a first information of the challenge code by the first prompting information; and
prompting the user to input a second information of the challenge code by the second prompting information.

4. The method according to claim 2 or 3, wherein the first prompting information is an information prompting the user to input a transaction account, and the second prompting information is an information prompting the user to input a transaction amount.

5. The method according to claim 1, wherein the challenge code at least comprises a first information of the challenge code and a second information of the challenge code.

6. The method according to claim 5, wherein receiving the challenge code input by the user comprises:
sequentially receiving the first information of the challenge code and the second information of the challenge code which are input by the user.

7. The method according to claim 5 or 6, wherein the first information of the challenge code is a transaction account, and the second information of the challenge code is a transaction amount.

8. The method according to any one of claims 1-7, before prompting the user to input the challenge code by the prompting information, further comprising:
prompting the user to input a power-on password;
validating whether the power-on password input by the user is correct; and
if the power-on password input by the user is correct, prompting the user to input the challenge code by the prompting information.

9. An electronic password generating apparatus, comprising:
a prompting device configured for prompting a user to input a challenge code by a prompting information, wherein the prompting information is an information containing a meaning represented by the challenge code to be input;
an input device configured for inputting the challenge code; and
a processing chip configured for receiving the challenge code, and generating an electronic password according to the challenge code and a current time parameter.

10. The apparatus according to claim 9, wherein the prompting device comprises a display device and/or a sounding device, the display device is configured for displaying the prompting information in a form of a text, and the sounding device is configured for outputting the prompting information in a form of a voice.

11. The apparatus according to claim 9, wherein the input device comprises a button and/or a touch screen.

12. The apparatus according to claim 9, wherein the prompting information at least comprises a first prompting information and a second prompting information.

13. The apparatus according to any one of claims 9-12, wherein the prompting device is particularly configured for:
prompting the user to input a first information of the challenge code by the first prompting information; and
prompting the user to input a second information of the challenge code by the second prompting information.

14. The apparatus according to any one of claims 9-13, wherein the first prompting information is an information prompting the user to input a transaction account, and the second prompting information is an information prompting the user to input a transaction amount.

15. The apparatus according to claim 9, wherein the challenge code at least comprises a first information of the challenge code and a second information of the challenge code.

16. The apparatus according to claim 15, wherein the processing chip is particularly configured for:
sequentially receiving the first information of the challenge code and the second information of the challenge code which are input by the user.

17. The apparatus according to claim 15 or 16, wherein the first information of the challenge code is a transaction account, and the second information of the challenge code is a transaction amount.

18. The apparatus according to claim 9, wherein the input device is further configured for inputting a power-on password.

19. The apparatus according to claim 18, wherein the processing chip is further configured for validating whether the power-on password is correct; if the power-on password is correct, indicating for the prompting device to prompt the user to input the challenge code by the prompting information.

20. An electronic password authentication system, comprising:
an electronic password generating apparatus according to any one of claims 9-19; and
a transaction system configured for generating an electronic password at the transaction system according to the challenge code and the current time parameter, receiving the electronic password at the electronic password generating apparatus, and comparing the electronic password at the electronic password generating apparatus with the electronic password at the transaction system to complete the authentication.
